# EUROPEAN PATENT APPLICATION

(11) **EP 4 246 883 A1**
(43) Date of publication of application: **20.09.2023**
(21) Application number: 22162016.4
(22) Date of filing: 15.03.2022
(51) Int. Cl.: H04L 9/40

(54) **TECHNIQUES TO DECREASE THE LEVEL OF ENCRYPTION IN A TRUSTED COMMUNICATION ENVIRONMENT**

(71) Applicant: Deutsche Telekom AG, 53113 Bonn (DE)
(72) Inventor: AMEND, Markus, 63667 Nidda (DE)
(74) Representative: Braun-Dullaeus Pannen Emmerling Patent- & Rechtsanwaltspartnerschaft mbB

(57) **Abstract**

Techniques for transmitting data packets of one communication service from a first network entity, in particular a sending entity, to a second network entity, in particular a receiving entity, over a communication path, wherein the communication path comprises a first communication section and a second communication section, and wherein security-level-adaption means are provided between the first communication section and the second communication section to adapt a security level of the data packets, the method comprising the steps of:
• determining a level of trustiness of the first and/or the second communication section by the first network entity;
• comparing the level of trustiness to a predefined trustiness threshold;
• providing the data packets with a security level depending on the outcome of the comparison as follows:
o if the level of trustiness of the first communication section is higher than the predefined trustiness threshold: sending the data packets by the first network entity with a lower security level over the first communication section and increasing the security level of the data packets from the lower security level to a higher security level when the data packets are entering the second communication section;
o or if the level of trustiness of the first communication section is below the predefined trustiness threshold: sending the data packets by the first network entity with a higher security level over the first communication section.

## Description

The invention relates to a method, a network entity, security-level-adaption means, and a communication system for transmitting data packets of one communication service from a first network entity, in particular a sending entity, to a second network entity.

To ensure that Internet protocols can be used as universally as possible and are easy to implement, they are preferably defined in standardization committees [1]. In this context, the so-called MP-DCCP was proposed and defined as a multipath extension of the DCCP [2]. This extension makes it possible for the single-path protocol DCCP to use multiple paths for transmitting payload between a sender and a receiver in a network.

Such a multipath solution makes data transmission more reliable and increases its bandwidth. For this purpose, the various data packets must be distributed to the different communication paths using an appropriate distribution logic unit, in particular a multipath scheduler.

Both DCCP and MP-DCCP have been implemented with a "congestion control" functionality and can adjust the Congestion Window CNWD accordingly to avoid congestion situations of the respective paths.

Two other Internet protocols are TCP and UDP, DCCP is located between TCP and UDP with respect to its properties and shares some properties with each of these protocols.

The Datagram Congestion Control Protocol (DCCP) is a network protocol of the transport layer. It is used, for example, for the transmission of media streams in IP networks when a congestion control mechanism is to be used. This is because the TCP protocol, which is otherwise frequently used for this purpose, entails disadvantages in the timely delivery of "real-time data" - for example, due to its forced acknowledgement messages. DCCP was developed in such a way that it is easy to switch an application from UDP to DCCP. For this purpose, the required functionality has been kept minimal and additional functions have been moved to higher layers. It can be used with any application that requires unreliable unicast connections with congestion control. So DCCP has less overhead than TCP, but more than UDP, and may be the best compromise for some applications.

DCCP and its multipath extension MP-DCCP, are therefore especially interesting for services that are latency sensitive or services that can handle less reliable delivery of data packets. In particular, this can apply to video telephony.

In particular, MP-DCCP is designed to provide multipath transport in Hybrid Access and 3GPP ATSSS topologies, wherein both Hybrid Access and 3GPP ATSSS are multipath connection requirements provided and controlled by a network operator, in particular a telecommunication network operator. In those scenarios the multipath communication can be provided between a UE and a telecommunication operator - which is the 3GPP ATSSS case - or between a Customer Premises Equipment "CPE" like a home-based router and the telecommunication operator - which is the hybrid access case. It is often the case, especially if service is not multipath capable, that the multipath communication is being terminated at the termination point and is continued as being single path data packet transport. One of the objectives of MP-DCCP is to provide multipath transport for UDP traffic according to an encapsulation scheme specified in [3]. If virtual interfaces are provided, as described in EP 820 088 A1, which is hereby included into the teaching of the description, any traffic (especially UDP traffic) can be read and sent encapsulated over MP-DCCP. This concept complements the MP-TCP scenarios, which are already defined for 3GPP ATSSS. Due to QUIC deployments, there would be a continuous increase of UDP traffic.

One of the key arguments for deploying QUIC is its e2e encryption of metadata and payload.

QUIC is a general-purpose transport layer network protocol. QUIC is used by more than half of all connections from the Chrome web browser to Google's servers.

QUIC improves performance of connection-oriented web applications that are currently using TCP. It does this by establishing a number of multiplexed connections between two endpoints using User Datagram Protocol (UDP).

QUIC works hand-in-hand with HTTP/2's multiplexed connections, allowing multiple streams of data to reach all the endpoints independently, and hence independent of packet losses involving other streams. In contrast, HTTP/2 hosted on Transmission Control Protocol (TCP) can suffer head-of-line-blocking delays of all multiplexed streams if any of the TCP packets are delayed or lost.

QUIC's secondary goals include reduced connection and transport latency, and bandwidth estimation in each direction to avoid congestion. It also moves congestion control algorithms into the user space at both endpoints, rather than the kernel space, which it is claimed will allow these algorithms to improve more rapidly. Additionally, the protocol can be extended with forward error correction (FEC) to further improve performance when errors are expected, and this is seen as the next step in the protocol's evolution.

When using ATSSS and Hybrid Access (MP-)QUIC is an option to be used between UE/CPE and MNO as described in [7]. If E2E QUIC is now established by a UE application (or by a terminal at the CPE) with a service on the Internet, then this must be encapsulated via the (MP-)QUIC for ATSSS/Hybrid.

Even if there is a need for encrypted communication from a customer and server-side, the encryption process is very inefficient process for the communication network.

Hence, it is the task of the invention to provide techniques to increase the efficiency of the communication network while maintaining a sufficient encryption level.

This object is solved by the features of the independent claims.

The following description considers the terms security level of the data packet and encryption level of data packet to be synonyms. So, if an encryption level is increased, the security of the data packet increases to. If no encryption is applied to a data packet, the data packet is not secured.

The features of the various aspects of the invention described below or the various examples of implementation may be combined with each other, unless this is explicitly excluded or is technically impossible.

Preliminary note: If the specification describes more than one communication path, it is to be understood that these communication paths are at least logically separated. In particular, the communication paths are based on different technologies like cellular, Wi-Fi, xDSL, etc.

According to a first aspect of the invention, a method for transmitting data packets of one communication service from a first network entity, in particular a sending network entity, to a second network entity, in particular a receiving network entity, over a communication path is provided. The communication path comprises a first communication section and a second communication section. In particular, the first communication section provides another level of trustiness than the second communication section. In an embodiment, the level of trustiness of the first communication section is higher than the level of trustiness of the second communication section. Security-level-adaption means are provided between the first communication section and the second communication section to adapt a security level of the data packets, the method comprising the steps of:
- determining a level of trustiness of the first and/or the second communication section by the first network entity; in an embodiment, the level of trustiness of the first and/or the second communication section by the first network entity can simply be supplied by the telecommunication network provider to the first network entity over a communication path; trustiness can be described in parameters that specify the security level of the communication section. This means, if certain security measurements are applied, for example by a network provider within the communication section, then the level of trustiness will be higher as if no such security measurements are applied. It is possible to set up a lookup table that lists the security measurements in one column and assigns a respective level of trustiness in the second column. For example, a leased line communication within the home network of the user will have a higher trustiness than a public WLAN. It is also possible that the network provider simply specifies that a certain communication sections has a certain trustiness level. In particular, the network provider will assign a high trustiness level to those communication sections that are fully operated by the telecommunication network provider himself. For example, his hybrid access environment or his 3GPP ATSSS environment;
- comparing the level of trustiness to a predefined trustiness threshold; the predefined trustiness threshold can be predefined by the telecommunication network provider; an algorithm, preferably implemented on the first network entity, is configured to make the comparison;
   ∘ providing the data packets with a security level, i.e. and encryption level, depending on the outcome of the comparison as follows: i) if the level of trustiness of the first communication section is higher than the predefined trustiness threshold: sending the data packets by the first network entity with a lower security level over the first communication section and increasing the security level of the data packets from the lower security level to a higher security level when the data packets are entering the second communication section; in an embodiment, the data packets are sent with zero encryption over the first communication section and with encryption over the second communication section; ii) or if the level of trustiness of the first communication section is below the predefined trustiness threshold: sending the data packets by the first network entity with a higher security level over the first communication section.

It is an advantage of the invention that the computational encryption overhead within the telecommunication network can be reduced at least partially entrusted environments within the communication network. It is a further advantage, that latency effects are reduced. Those trusted environments can be 3GPP ATSSS or Hybrid Access, controlled by the telecommunication network operator. In those trusted environments the encrypted QUIC communication can be replaced by single or multipath optimized transport protocols with a lower or non-encryption level. In case of 3GPPP ATSSS, the security-level-adaption means can be arranged within the user plane function (UPF) of the telecommunication network provider. From the UPF onward to the Data network, QUIC can be applied towards the final destination, i.e. until the data packets reached the second network entity. This provides the advantage that within the trusted environment the transport can be optimized for multipath while in the trusted environment all the QUIC features are available. For example, the methods can be applied to Hybrid Access scenarios or to 3GPPP ATSSS scenarios.

In an embodiment, the first communication section and the second communication section can be a single path or a multipath scenario.

This provides the advantage that the method can be applied in a flexible method to network entities that are single path or multipath capable.

In an embodiment, the security-level-adaption means are provided at the interface between the first communication section and the second communication section. This provides the advantage that the trustiness of the first communication section can be fully exploited by at the same time the security level over the second communication section is being maintained.

In an embodiment, the security-level-adaption means are arranged within the user plane function (UPF) or an Inter-Working-Function, e.g., N3IWF, of a telecommunication network provider.

This provides the advantage of a termination point of the first communication section that is within the control of the telecommunication network provider.

In an embodiment, the data packets are transmitted over the first communication section as:
- single path or multipath QUIC without encryption;
- single path or multipath QUIC with reduced encryption level;
- unencrypted protocols like DCCP, MP-DCCP, MP-TCP, SCTP.

This provides the advantage that those data packets reduce the computational overhead due to the lower level of encryption or due to the non-encryption.

In an embodiment, the data packets are transmitted over the second communication section as standard single path QUIC protocol and/or a standard multipath QUIC protocol data packets.

This provides the advantage that the features of the QUIC protocol, in particular the encryption features of the QUIC protocol, can be fully exploited over the second communication section. Additionally, this provides the advantage that the method is designed for QUIC communication between the first and the second network entity which is of great value because QUIC deployment is steadily increasing when network entities are communicating over the Internet. It is also possible that the first and the second network entity signal to each other within the handshake process if they are single path QUIC or multipath QUIC capable. This information can also be supplied to the security-level-adaption means. Hence, if the security-level-adaption means knows that the second network entity is multipath QUIC capable, it can convert the received data packets to standard multipath QUIC data packets. Within the context of this invention, standard QUIC refers to the QUIC version currently used at the date of filing the invention.

In an embodiment, the first network entity signals to the security-level-adaption means a multipath QUIC capability of the second network entity.

This provides the advantage that the first network entity is placed within the trusted environment and is allowed to communicate with the security-level-adaption means.

In an embodiment, the first communication entity directs the data traffic to the security-level-adaption means only if the level of trustiness of the first communication section is higher than the predefined trustiness threshold.

This provides the advantage that the security-level-adaption means is only being used if it is actually needed.

The data traffic can be directed to the security-level-adaption means by explicit proxy routing or implicit proxy routing. In the case of implicit proxy routing, the security-level-adaption means is simply placed between the first and the second network entity so that all the data traffic between the entities must go through the security-level-adaption means.

In the case of the explicit method, destination address information has to be transmitted out-of-band or in-band, e.g. using QUIC options or in the payload, especially as part of the QUIC handshake process. The address information of the security-level-adaption means can also be stored within the operating system or application of the network entity.

In an embodiment, the security level of the data packets is increased from the lower security level to a higher security level when the data packets are entering the second communication section only if the second communication section has a level of trustiness below the predefined trustiness threshold.

This provides the advantage that no additional encryption is being applied to the data packets if one can also trust the second communication section. This might be the case if the second communication section is being operated by a further telecommunication provider that is trusted by the telecommunication provider that operates the first communication section.

In an embodiment, the predefined trustiness threshold depends on the application running on the first network entity and/or the second network entity.

This provides the advantage that the method can be flexibility adapted to the individual needs of a certain application so as to adapt the level of encryption accordingly. This provides the optimal balance between producing computational overhead while at the same time providing sufficient security for the data packets.

According to a second aspect of the invention, a first network entity configured for transmitting data packets of one communication service to a second network entity over a communication path is provided, wherein the communication path comprises a first communication section and a second communication section, the first network entity comprises:
• an interface for single path and/or a multipath communication via the first communication section;
▪ a processing unit configured i) to determine a level of trustiness of the first and/or the second communication section by the first network entity; ii) to compare the level of trustiness to a predefined trustiness threshold; the lookup table of the different levels of trustiness and the predefined trustiness threshold can be stored within a database of the first network entity; iii) to generate the data packets with a security level depending on the outcome of the comparison as follows: a) if the level of trustiness of the first communication section is higher than the predefined trustiness threshold: sending the data packets by the first network entity with a lower security level over the first communication section. The security level of the data packets can then be increased from the lower security level to a higher security level when the data packets enter the second communication section, in particular by a security-level-adaption means; b) or if the level of trustiness of the first communication section is below the predefined trustiness threshold: sending the data packets by the first network entity with a higher security level over the first communication section.

The first network entity can be user equipment like a tablet, smart phone, a computer, a router or a server of the telecommunication provider on which an application is running.

The first network entity is configured to perform the method described above.

According to a third aspect of the invention, a security-level-adaption means for adapting a security level of data packets is provided comprising:
- a first communication interface designed for single path and/or a multipath communication via a first communication section;
- a second communication interface designed for single path and/or a multipath communication via a second communication section;
- a processing unit configured to receive data packets from a first network entity via the first communication section having a lower security level and to increase the security level of those data packets to a higher security level and to send them to second network entity via the second communication section.

The security-level-adaption means can be a packet conversion module, in particular a QUIC proxy, being arranged to convert non QUIC data traffic or QUIC data traffic with a lower encryption level to single path or multipath QUIC data traffic with standard encryption level. The packet conversion module can comprise a database with information how to perform the conversion of the data traffic. The security-level-adaption means is configured to perform the method described above.

In an embodiment, the security-level-adaption means is configured to receive
- single path or multipath QUIC without encryption,
- single path or multipath QUIC with reduced encryption level,
- unencrypted protocols like DCCP, MP-DCCP, MP-TCP, and/or SCTP
   and to convert any of those received data packets to standard single path QUIC protocol and/or a standard multipath QUIC protocol data packets.

According to a fourth aspect of the invention, a communication system for transmitting data packets over a communication network is provided that comprises
- the first network entity described above and a second network entity, wherein the first network entity and the second network entity communicate by sending data packets over a communication path that comprises first communication section and a second communication section each having a level of trustiness, in particular the first communication section having a higher level of trustiness than the second communication section;
- the security-level-adaption means described above being arranged between the first communication section and the second communication section as to receive the data packets from the first network entity to adapt the security level of the data packets and to forward them to the second network entity.

The communication system is configured to perform the method described above.

In an embodiment, the communication system comprises a level of trustiness detection unit to determine the level of trustiness of the first communication section and/or the second communication section. The detection unit can signal the outcome of its assessment to the first network entity, to the telecommunication provider, and/or to the security-level-adaption means. The detection mechanism is configured to recognize the trusted environment in which the encryption level can be lowered or even being removed. Preferably, the detection unit is being arranged in the first network entity that usually establish the connection indirection to an access provider. Alternatively, or additionally, the detection unit can be arranged outside the first network entity, for example within the UPF or in a separate entity. This has the benefit that also data traffic that is not initiated by the first network entity can be modified according to the invention. The detection mechanism can also detect if the first network entity joins or leaves a trusted environment, for example based on a GPS location, connection to a home environment or connection to trusted base stations.

In particular, the first communication section belongs to the network provider which the first network entity is being subscribed for example by means of its SIM or eSIM card. The first and the second communication path can be associated to different network providers

In the following, preferred implementation examples of the present invention are explained with reference to the accompanying figure:
- Fig. 1:: shows a communication system according to the invention.
- Fig. 2:: shows the communication system of Fig.1 in a further embodiment.
- Fig. 3:: shows a QUIC proxy.

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

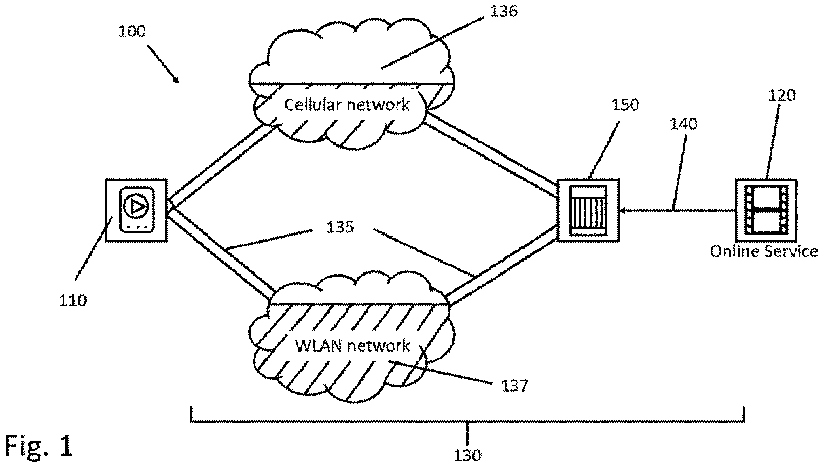

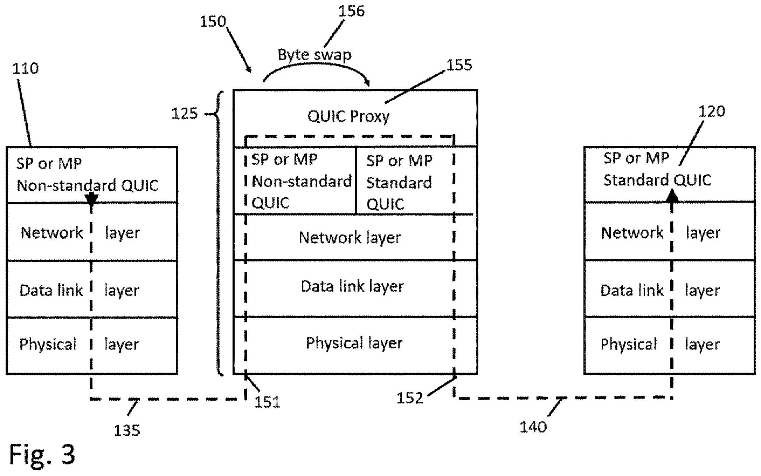

Fig. 1 shows an inventive telecommunication system 100. The first network entity 110 that it can be a smart phone 110 communicates with a second network entity 120 of the Internet that can be a server 120 that runs an online service. The telecommunication system 100 provides a communication path 130 that comprises of a first communication section 135 and a second communication section 140. The first communication section 135 can be a single-path or multiple-path capable and the second communication section 140 can be single-path or multiple-path. In Fig. 1 the first communication section 135 comprises of a cellular path 136 and a WLAN path 137. Hence, the smart phone 110 is multipath capable. The first communication section 135 as well as they second communication section 140 terminate in a QUIC proxy 150 as described in the context of Fig. 3.

The smart phone 110 determines a level of trustiness of the first communication section 135 and compares the level of trustiness to a predefined trustiness threshold stored in the database of the smart phone 110 by means of an appropriate designed algorithm implemented within a processor of the smart phone 110. The level of trustiness can be determined by detection unit that is implemented within the smartphone 110. If the level of trustiness of the first communication section 135 is higher than the predefined trustiness threshold, smart phone 110 sends data packets with a lower security level, in other words encryption level, over the first communication section 135. The data packets are non-standard QUIC data packets, especially with respect to the standard encryption level of the QUIC protocol. Those data packets can be a) single path or multipath QUIC without encryption; b) single path or multipath QUIC with reduced encryption level; c) unencrypted protocols like DCCP, MP-DCCP, MP-TCP, SCTP.

These different cases will be described in the following.

### a) In the case of a) two variations are possible:

In the following, the term non-encryption QUIC will be used. Up to now, QUIC always use and encryption level so that non-encryption QUIC refers to a QUIC protocol that has not yet been standardized. However, is such a non-encryption QUIC exists, the person skilled in the art can easily use it in the context of this invention.
i) QUIC application on the smart phone 110: the application of the smart phone 110 establishes a non-encryption QUIC connection in direction to the QUIC-proxy 150 that is arranged at the UPF of the telecommunication provider (explicit proxying) or to the second network entity 120 routed through the QUIC-proxy 150 (implicit proxying). Due to the non-encryption, the QUIC proxy 150 can terminate the non-encryption QUIC connection and swap the payload into a new standard single path or a multipath QUIC connection indirection to the second network entity 120, wherein the data packets of this new QUIC connection have and increased security level by applying the standard QUIC encryption. In a further embodiment, a QUIC stream created by the application running on the smart phone 110 is converted into a MP-QUIC. This has the benefit that traffic splitting is supported while QUIC only provides steering and switching.
ii) QUIC application using MP-QUIC on the smart phone 110: the application establishes a non-encryption MP-QUIC connection in direction to the QUIC proxy 150 (explicit proxying) or in direction to the second network entity 120 routed through the QUIC proxy 150 (implicit proxying). Due to the non-encryption MP-QUIC, the QUIC proxy 150 can terminate the data traffic and swap the payload into a new standard QUIC or a MP-QUIC connection.

### b) describes a partial encryption case

As it was the case within a), b) relies on a not yet developed partial-encryption QUIC protocol. The partial-encryption (MP-) QUIC protocol enables to only encrypt the payload of a QUIC data packet while other parts of the quick protocol, typically the header information, that is required to terminate a QUIC connection is not being encrypted or that at least the key for decryption is known. This provides the benefit that the payload is secured while the QUIC connection is valid can be terminated at the QUIC proxy 150 and the encrypted payload can nevertheless be swapped to a new standard (MP)-QUIC protocol by the QUIC proxy 150. In this context, it has to be further differentiated between the explicit and implicit proxy routing. In the explicit routing case, the information, which are required to terminate a QUIC connection, can be encrypted based on a negotiation between UE and UPF - different layer of encryptions like the peel of an onion. For the implicit routing this negotiation of encryption material is not possible which either removes the option to encrypt header information or applies encryption on both-sides pre-known crypto information.

c) Unencrypted protocols like MP-DCCP, MPTCP, SCTP are be applied between the first network entity 110 and QUIC proxy 150 to replace a standard (MP-)QUIC connection, while the QUIC proxy 150 itself communicates over standard (MP-)QUIC data packets with the second network entity 120. In this case, the payload is extracted at the QUIC proxy 150 from those unencrypted protocols and shifted into the (MP)-QUIC connection established towards the second network entity 120. This can require to inform the QUIC proxy 150 about the intend to use a non-QUIC based multipath protocol, while communication to the second network entity 120 shall be performed as standard (MP-)QUIC.

For all scenarios a)-c), it has to be noted that explicit proxying requires an explicit addressing of the QUIC proxy 150, e.g. residing on a UPF. That means, the original destination has to be communicated in-band or out-of-band. In an in-band scenario the original destination could be transmitted has header option or in the payload during the establishment of the QUIC/MP-QUIC/SCTP/MP-DCCP/MPTCP connection from the UE to the UPF. In an out-of-band scenario e.g. NAS messages in a 3GPP system could inform the UPF about the destination IP-address.

In case of c) it might be required that first network entity 110 and the second network entity 120 negotiate the support of other MP-protocols than (MP-)QUIC. This can be part of a MA-PDU session establishment as described in 3GPP rel. 16+ system [5].

In an embodiment, the described techniques can be combined with a SHIM layer as proposed in the application EP 21193902.0. This SHIM layer can inform the application to select another protocol than QUIC, reduce encryption level or transparently intercept the not full encrypted QUIC traffic and forward the payload with another network protocol. This has the benefit, that applications itself have not to directly interact with the detection and handling of a trusted domain multipath transport.

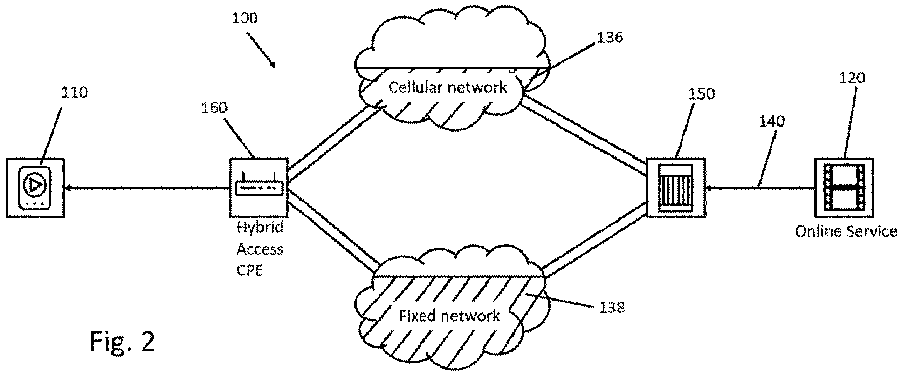

Fig. 2 shows the communication system of Fig.1 in a further embodiment. In Fig. 2, the smart phone 110 is only indirectly connected to the cellular path 133 and a fixed network 138 but is connected by means of a hybrid access CPE 160, for example a home router 160. This is the typical situation within the home network of the user, wherein the home environment of the user is typically a trusted environment. It follows that the first communication section 135 comprises additionally the communication section between the smart phone 110 and the home router 160.

Fig. 3 shows details of the QUIC proxy 150. The first network entity sends single path or multipath non-standard QUIC data traffic, in particular unencrypted protocols like DCCP, MP-DCCP, MP-TCP, SCTP, over the first communication section 135. The QUIC proxy 150 shows a first interface 151 that is configured to receive those data packets. The non-standard QUIC data traffic passes through the different OSI layers 125 until it reaches a packet conversion module 155 of the QUIC proxy 150. The packet conversion module 155 converts the non-standard QUIC data traffic to single path or a multipath standard QUIC data traffic and creates appropriate data packets. In particular, a byte swap 156 of the payload is being performed. The created data packets now have a security level according to the QUIC encryption protocol. The created (MP)-QUIC data packets passed through the different OSI layers 125 in the opposite direction and leave the QUIC proxy 150 by means of a second interface 152 and are transmitted as multipath or single path traffic over the second communication section 152 the second network entity 120. The QUIC proxy 150 is capable to perform this conversion because the data packets receiving the QUIC proxy 150 are not being encrypted due to the standard QUIC scheme.

The following references are fully incorporated to the disclosure of this invention.
[1] Markus Amend and Dirk v. Hugo and Anna Brunstrom and Andreas Kassler and Veselin Rakocevic and Stephen Johnson, "DCCP Extensions for Multipath Operation with Multiple Addresses", draft-ietf-tsvwg-multipath-dccp-OO, August 2021;
[2] Sally Floyd and Mark J. Handley and Eddie Kohler, "Datagram Congestion Control Protocol (DCCP)", RFC no. 4340, March 2006;
[3] https://datatracker.ietf.org/doc/draft-amend-tsvwg-multipath-framework-mpdccp/;
[4] https://datatracker.ietf.org/doc/draft-amend-tsvwg-multipath-framework-mpdccp/
[5] https://datatracker.ietf.org/doc/html/rfc9000
[6] 3GPP Technical Specification: 23.501, Version 16.10.0, 24 September 2021
[7] https://www.3gpp.org/ftp/Specs/archive/23_series/23.700-93/23700-93-h00.zip

## Claims

1. A method for transmitting data packets of one communication service from a first network entity (110), in particular a sending entity (110), to a second network entity (120), in particular a receiving entity (120), over a communication path (130), wherein the communication path comprises a first communication section (135) and a second communication section (140), and wherein security-level-adaption means are provided between the first communication section (135) and the second communication section (140) to adapt a security level of the data packets, the method comprising the steps of:
• determining a level of trustiness of the first and/or the second communication section (135, 140) by the first network entity (110);
• comparing the level of trustiness to a predefined trustiness threshold;
• providing the data packets with a security level depending on the outcome of the comparison as follows:
∘ if the level of trustiness of the first communication section (135) is higher than the predefined trustiness threshold: sending the data packets by the first network entity (110) with a lower security level over the first communication section (135) and increasing the security level of the data packets from the lower security level to a higher security level when the data packets enter the second communication (140) section;
∘ or if the level of trustiness of the first communication section is below the predefined trustiness threshold: sending the data packets by the first network entity (110) with a higher security level over the first communication section (135).

2. The method of claim 1, wherein the first communication section and the second communication section (135, 140) provide a single path or a multipath scenario.

3. The method of any of the claims, wherein the security-level-adaption means (150) are provided at the interface between the first communication section (135) and the second communication section (140).

4. The method of any of the claim 3, wherein the security-level-adaption means (150) are arranged within the user plane function "UPF" or N3IWF of a network provider.

5. The method of any of the claims, wherein the data packets are transmitted over the first communication section (135) as:
• single path or multipath QUIC without encryption;
• single path or multipath QUIC with reduced encryption level;
• unencrypted protocols like DCCP, MP-DCCP, MP-TCP, SCTP.

6. The method any of the claims, wherein the data packets are transmitted over the second communication section (140) as standard single path QUIC protocol and/or a standard multipath QUIC protocol data packets.

7. The method any of the claim 6, wherein the first network entity (110) signals to the security-level-adaption means a multipath QUIC capability of the second network entity (120).

8. The method any of the claims, wherein the first communication entity (110) directs the data traffic to the security-level-adaption means only if the level of trustiness of the first communication section (135) is higher than the predefined trustiness threshold.

9. The method any of the claims, wherein the security level of the data packets is increased from the lower security level to a higher security level when the data packets are entering the second communication section (140) only if the second communication section has a level of trustiness below the predefined trustiness threshold.

10. The method any of the claims, wherein the predefined trustiness threshold depends on the application running on the first network entity (110) and/or the second network entity (120).

11. A first network entity configured for transmitting data packets of one communication service to a second network entity over a communication path (130), wherein the communication path comprises a first communication section and a second communication section, the first network entity (110) comprises:
• an interface for single path and/or a multipath communication via the first communication section;
• a processing unit configured
∘ to determine a level of trustiness of the first and/or the second communication section (135, 140) by the first network entity (110);
∘ to compare the level of trustiness to a predefined trustiness threshold;
∘ to generate the data packets with a security level depending on the outcome of the comparison as follows:
▪ if the level of trustiness of the first communication section (135) is higher than the predefined trustiness threshold: sending the data packets by the first network entity (110) with a lower security level over the first communication section (135);
▪ or if the level of trustiness of the first communication section is below the predefined trustiness threshold: sending the data packets by the first network entity with a higher security level over the first communication section (135).

12. A security-level-adaption (150) means for adapting a security level of data packets comprising:
• a first communication interface (151) designed for single path and/or a multipath communication via a first communication section (135);
• a second communication interface (152) designed for single path and/or a multipath communication via a second communication section (140);
• a processing unit configured to receive data packets from a first network entity via the first communication section having a lower security level and to increase the security level of those data packets to a higher security level and to send them to second network entity via the second communication section.

13. The security-level-adaption means of claim 12, wherein the security-level-adaption means is configured to receive
• single path or multipath QUIC without encryption,
• single path or multipath QUIC with reduced encryption level,
• unencrypted protocols like DCCP, MP-DCCP, MP-TCP, and/or SCTP
and to convert any of those received data packets to standard single path QUIC protocol and/or a standard multipath QUIC protocol data packets.

14. Communication system (100) for transmitting data packets over a communication network comprising
• the first network entity (110) of claim 11 and a second network entity (120), wherein the first network entity (110) and the second network entity (120) communicate by sending data packets over a communication path (130) that comprises first communication section (135) and a second communication section (140) each having a level of trustiness, in particular the first communication section having a higher level of trustiness than the second communication section;
• the security-level-adaption means (150) of claim 12 arranged between the first communication section and the second communication section as to receive the data packets from the first network entity to adapt the security level of the data packets and to forward them to the second network entity.

15. The communication system of claim 14, wherein the communication system comprises a level of trustiness detection unit to determine the level of trustiness of the first communication section and/or the second communication section.

## Amended claims

### Amended claims in accordance with Rule 137(2) EPC.

1. A method for transmitting data packets of one communication service from a first network entity (110), in particular a sending entity (110), to a second network entity (120 over a communication path (130), wherein the communication path comprises a first communication section (135) and a second communication section (140), and wherein security-level-adaption means are provided between the first communication section (135) and the second communication section (140) to adapt a security level of the data packets, the method comprising the steps of:
• determining a level of trustiness of the first communication section (135) by the first network entity (110);
• comparing the level of trustiness to a predefined trustiness threshold;
• providing the data packets with a security level depending on the outcome of the comparison as follows:
∘ if the level of trustiness of the first communication section (135) is higher than the predefined trustiness threshold: sending the data packets by the first network entity (110) with a lower security level over the first communication section (135) and increasing the security level of the data packets from the lower security level to a higher security level when the data packets enter the second communication (140) section;
∘ or if the level of trustiness of the first communication section is below the predefined trustiness threshold: sending the data packets by the first network entity (110) with the higher security level over the first communication section (135).

2. The method of claim 1, wherein the first communication section and the second communication section (135, 140) provide a single path or a multipath scenario.

3. The method of any of the claims, wherein the security-level-adaption means (150) are provided at the interface between the first communication section (135) and the second communication section (140).

4. The method of any of the claim 3, wherein the security-level-adaption means (150) are arranged within the user plane function "UPF" or N3IWF of a network provider.

5. The method of any of the claims, wherein the data packets are transmitted over the first communication section (135) as:
• single path or multipath QUIC without encryption;
• single path or multipath QUIC with reduced encryption level;
• unencrypted protocols comprising DCCP, MP-DCCP, MP-TCP, and/or SCTP.

6. The method any of the claims, wherein the data packets are transmitted over the second communication section (140) as standard single path QUIC protocol and/or a standard multipath QUIC protocol data packets.

7. The method any of the claim 6, wherein the first network entity (110) signals to the security-level-adaption means a multipath QUIC capability of the second network entity (120).

8. The method any of the claims, wherein the first communication entity (110) directs the data traffic to the security-level-adaption means only if the level of trustiness of the first communication section (135) is higher than the predefined trustiness threshold.

9. The method any of the claims, wherein the security level of the data packets is increased from the lower security level to a higher security level when the data packets are entering the second communication section (140) only if the second communication section has a level of trustiness below the predefined trustiness threshold.

10. The method any of the claims, wherein the predefined trustiness threshold depends on the application running on the first network entity (110) and/or the second network entity (120).

11. A first network entity configured for transmitting data packets of one communication service to a second network entity over a communication path (130), wherein the communication path comprises a first communication section and a second communication section, the first network entity (110) comprises:
• an interface for single path and/or a multipath communication via the first communication section;
• a processing unit configured
∘ to determine a level of trustiness of the first communication section (135) by the first network entity (110);
∘ to compare the level of trustiness to a predefined trustiness threshold;
∘ to generate the data packets with a security level depending on the outcome of the comparison as follows:
▪ if the level of trustiness of the first communication section (135) is higher than the predefined trustiness threshold: sending the data packets by the first network entity (110) with a lower security level over the first communication section (135);
▪ or if the level of trustiness of the first communication section is below the predefined trustiness threshold: sending the data packets by the first network entity with the higher security level over the first communication section (135).

12. A security-level-adaption (150) means for adapting a security level of data packets comprising:
• a first communication interface (151) designed for single path and/or a multipath communication via a first communication section (135);
• a second communication interface (152) designed for single path and/or a multipath communication via a second communication section (140);
• a processing unit configured to receive data packets from a first network entity via the first communication section having a lower security level and to increase the security level of those data packets to a higher security level and to send them to second network entity via the second communication section.

13. The security-level-adaption means of claim 12, wherein the security-level-adaption means is configured to receive
• single path or multipath QUIC without encryption,
• single path or multipath QUIC with reduced encryption level,
• unencrypted protocols comprising DCCP, MP-DCCP, MP-TCP, and/or SCTP
and to convert any of those received data packets to standard single path QUIC protocol and/or a standard multipath QUIC protocol data packets.

14. Communication system (100) for transmitting data packets over a communication network comprising
• the first network entity (110) of claim 11 and a second network entity (120), wherein the first network entity (110) and the second network entity (120) communicate by sending data packets over a communication path (130) that comprises first communication section (135) and a second communication section (140) each having a level of trustiness;
• the security-level-adaption means (150) of claim 12 arranged between the first communication section and the second communication section as to receive the data packets from the first network entity to adapt the security level of the data packets and to forward them to the second network entity.

15. The communication system of claim 14, wherein the communication system comprises a level of trustiness detection unit to determine the level of trustiness of the first communication section and/or the second communication section.
